# EUROPÄISCHE PATENTSCHRIFT

(11) **EP 1 771 970 B1**
(45) Veröffentlichungstag und Bekanntmachung des Hinweises auf die Patenterteilung: **18.03.2015**
(21) Anmeldenummer: 05769656.9
(22) Anmeldetag: 11.07.2005
(51) Int. Cl.: H04L 12/24

(54) **NETZWERKMANAGEMENT MIT PEER-TO-PEER-PROTOKOLL**
NETWORK MANAGEMENT USING PEER-TO-PEER-PROTOCOL
GESTION DE RESEAU AU MOYEN D'UN PROTOCOLE PAIR A PAIR

(30) Priorität: 26.07.2004 DE 102004036259
(43) Veröffentlichungstag der Anmeldung: 11.04.2007
(73) Patentinhaber: Siemens Aktiengesellschaft, 80333 München (DE)
(72) Erfinder: BERGER, Michael, 82110 Germering (DE); RUSITSCHKA, Steffen, 81543 München (DE); SOUTHALL, Alan, 81247 München (DE); SOKOL, Joachim, 82008 Unterhaching (DE); SANNECK, Henning, 81669 München (DE)
(86) Internationale Anmeldenummer: PCT/EP2005/053305
(87) Internationale Veröffentlichungsnummer: WO 2006/010703

(56) Entgegenhaltungen:
- EP-A- 0 772 319
- EP-A- 1 150 454
- US-A1- 2002 032 769
- SCHINTKE F ET AL: "A framework for self-optimizing grids using P2P components" DATABASE AND EXPERT SYSTEMS APPLICATIONS, 2003. PROCEEDINGS. 14TH INTERNATIONAL WORKSHOP ON 1-5 SEPT 2003, PISCATAWAY, NJ, USA,IEEE, 1. September 2003 (2003-09-01), Seiten 689-693, XP010658252 ISBN: 0-7695-1993-8

## Beschreibung

Die Erfindung betrifft ein Verfahren zum Betreiben eines Netzwerkmanagementsystems mit als Manager und/oder als Agent fungierenden Knoten. Weiterhin betrifft die Erfindung ein Netzwerkmanagementsystem und einen Knoten in einem Netzwerkmanagementsystem.

Um den effizienten Betrieb von Netzen zu ermöglichen, werden Netzwerkmanagementsysteme eingesetzt, welche z.B. die Aufgaben des Fehlermanagements (Fault-Management), des Konfigurationsmanagements (Configuration Management), des Sicherheits-managements (Security-Management), des Abrechnungsmanagements (Accounting-Management) und des Leistungsmanagements (Performance-Management) übernehmen können. Durch das Netzwerkmanagement sollen geeignete Mechanismen zur Informationsverteilung und -verwaltung bereitgestellt werden, so dass dem Netzbetreiber bei Bedarf ein möglichst umfassendes Bild über den Netzzustand bereitgestellt wird und die einzelnen Netzknoten effizient überwacht und konfiguriert werden können. Hierzu werden mit Hilfe von Datenbanken Managementinformationen unter Verwendung von Informationsmodellen gesammelt, gespeichert und verwaltet. Die gesammelten Daten werden bei Bedarf von einem Manager ausgewertet, der mit den von ihm abhängigen Agenten, welche auf den Netzknoten lokalisiert sind, kommuniziert. Das Netzwerkmanagement erfolgt dabei getrennt nach Netzabschnitten, sogenannten managed domains, welchen die jeweiligen Netzwerkmanagementsysteme zugeordnet sind.

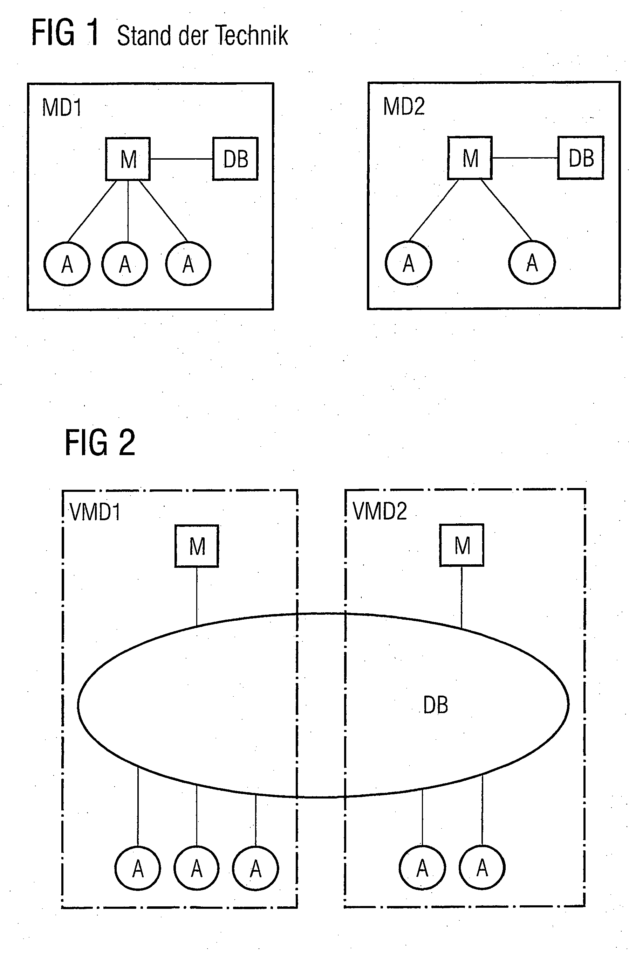

Figur 1 zeigt zwei Netzwerkmanagementsysteme bzw. die ihnen zugeordneten Netzabschnitte MD1 und MD2. Die Netzwerkmanagementsysteme weisen jeweils eine Datenbank DB auf, auf welche der Manager M zugreifen kann. Den Managern sind jeweils mehrere Agenten A zugewiesen. Zur Kommunikation zwischen einem Manager M und den Agenten A im Rahmen des Netzwerkmanagements können verschiedene Netzwerkmanagementprotokolle eingesetzt werden, wie z.B. SNMP (Simple Network Management Protocol), CMIP (Common Management Information Protocol), CORBA (Common Object Request Broker Architecture), Q3.

Heutige Netzwerkmanagementsysteme verwenden eine feste Zuordnung von Rollen für die Netzknoten, sowie feste Netzwerkmanagementprotokolle und Informationsmodelle. So kann z.B. keine Kommunikation zwischen verschiedenen Agenten eines Netzwerkmanagementsystems erfolgen, sondern lediglich zwischen einem Manager und den ihm zugeordneten Agenten, und dies auch nur unter Verwendung des hierfür festgelegten Netzwerkmanagementprotokolls.

Das Dokument EP 0 682 429 A2 beschreibt ein Verfahren zum Betreiben eines Netzwerkmanagementsystems unter Verwendung von SNMPv1. Die Agenten und Manager des Systems fungieren als Peers und haben untereinander die gleiche Wichtigkeit.

Die Druckschrift US 2002/0032769 A1 offenbart ein Netzwerkmanagementsystem mit Management-Einheiten und verteilten autonomen Agenten. Den Agenten sind Gerätekomponenten zugeordnet, zwischen denen Peer-Verbindungen gespeichert sind.

In dem Dokument EP 0 772 319 A2 ist ein Netzwerkmanagementsystem gezeigt, bei dem die Netzwerkmanager von zwei Teilnetzwerken über eine Peer-to-Peer-Konfiguration miteinander kommunizieren.

Der Erfindung liegt die Aufgabe zugrunde, ein flexibleres Verfahren zum Betreiben eines Netzwerkmanagementsystems aufzuzeigen. Weiterhin sollen ein flexibleres Netzwerkmanagementsystem und ein Knoten für ein solches Netzwerkmanagementsystem vorgestellt werden.

Diese Aufgabe wird durch ein Verfahren mit den Merkmalen des Anspruchs 1, und durch einen Knoten eines Netzwerkmanagementsystems, sowie durch ein Netzwerkmanagementsystem mit Merkmalen von nebengeordneten Ansprüchen gelöst.

Vorteilhafte Ausgestaltungen und Weiterbildungen sind Gegenstand von Unteransprüchen.

In dem Verfahren zum Betreiben eines Netzwerkmanagementsystems mit als Manager und/oder als Agent fungierenden Knoten kommuniziert erfindungsgemäß mindestens ein Knoten mit mindestens einem anderen Knoten unter Verwendung eines Peer-to-Peer-Protokolls.

Das Netzwerkmanagementsystem führt Aufgaben des Netzwerkmanagements durch, wie Fehlermanagement und/oder Konfigurationsmanagement und/oder Sicherheitsmanagement und/oder Abrechnungsmanagement und/oder Leistungsmanagement. Es umfasst Knoten, welche in Bezug auf das Netzwerkmanagement entweder ausschließlich als Manager oder als Agent fungieren, oder auch beide Rollen gleichzeitig oder nacheinander übernehmen können. Ein Manager gibt Agenten Managementoperationen zur Erfüllung vor und wertet die entsprechenden Rückmeldungen aus, somit kontrolliert er die jeweiligen Agenten. Ein Agent verarbeitet die von ihm zu erfüllenden Managementoperationen und wendet diese in Bezug auf die zu managenden Objekte an. Aufgrund dieser Anwendung werden Meldungen generiert, die an den Manager gesendet werden. Eine Beschreibung der Rollen des Managers und des Agenten findet sich z.B. in dem Standarddokument ISO 10040. Knoten eines Netzwerkmanagementsystems können außerhalb des Netzwerkmanagements andere Funktionen wahrnehmen.

In einem Mobilfunkkommunikationssystem kann in Bezug auf das Funkzugangsnetz als managed domain die Rolle eines Agenten z.B. durch eine Basisstation bzw. NodeB oder durch einen RNC (Radio Network Controller) erfüllt werden. Die Rolle eines Managers wird in der Regel durch einen Knoten ausgeübt, welcher nur diese Rolle erfüllt und keine anderen Aufgaben in Bezug auf das Funkzugangsnetz wahrnimmt. Eine andere managed domain eines Mobilfunkkommunikationssystems ist in der Regel das Kernnetz.

Erfindungsgemäß kommunizieren Knoten im Rahmen des Netzwerkmanagements unter Verwendung eines Peer-to-Peer-Protokolls. Beispiele für hierfür besonders geeignete Peer-to-Peer-Protokolle sind:
Chord, z.B. beschrieben in I. Stoica et al.: "Chord. A Scalable Peer-to-peer Lookup Protocol for Internet Applications", ACM SIGCOMM, San Diego, California, USA, August 2001;
ZIGZAG, z.B. beschrieben in D.A. Tran et al.: "ZIGZAG: An Efficient Peer-to-Peer Scheme for Media Streaming" IEEE INFOCOM 2003;
Scribe, z.B. beschrieben in M. Castro et al.: "SCRIBE: A large-scale and decentralized application-level multicast infrastructure", IEEE JSAC, 2002;
CAN, z.B. beschrieben in S. Ratnasamy et al.: "A Scalable Content-Addressable Network", ACM Sigcomm 2001, San Diego, California;
PAST, z.B. beschrieben in P. Druschel et al.: "PAST: A large-scale, persistent peer-to-peer storage utility", Hot OS VIII, Schloss Elmau, Germany, May 2001.

Im allgemeinen eigenen sich für den erfindungsgemäßen Einsatz insbesondere Peer-to-Peer-Protokolle, die auf DHTs (Distributed Hash Tables) basieren.

Peer-to-Peer-Protokolle geben Anleitungen zum Ablegen von Daten in Speichern und zum Auffinden von Daten in dem oder den jeweils passenden Speichern. Somit ermöglicht es ein Peer-to-Peer-Protokoll einem Peer, d.h. einem unter Verwendung des Peer-to-Peer-Protokolls mit anderen Knoten kommunizierenden Knoten, andere Peers aufzufinden, wobei zur Adressierung der Peers ein für das jeweilige Peer-to-Peer-Protokoll spezifischer Namensraum verwendet wird. Weiterhin wird es einem Peer ermöglicht, von anderen Peers gespeicherte Daten auf effiziente Weise aufzufinden.

Erfindungsgemäß ist auf dem mindestens einen Knoten ein Schichtenmodell realisiert, bei dem
- eine erste Schicht mit für mindestens ein Peer-to-Peer Protokoll spezifischen Funktionen,
- eine zweite Schicht mit netzwerkmanagementspezifischen Funktionen,
- eine dritte Schicht mit sowohl für mindestens ein Peer-to-Peer Protokoll spezifischen als auch netzwerkmanagementspezifischen Funktionen
vorhanden ist.

Die erfindungsgemäße Peer-to-Peer Kommunikation kann zwischen Managern, zwischen Agenten, und auch zwischen Managern und Agenten erfolgen. Von Vorteil ist die Verwendung von Peer-to-Peer-Protokollen zur Kommunikation zwischen Knoten eines Netzwerkmanagementsystems insbesondere bei Vorliegen einer Vielzahl von Agenten, da die Datenabfrage von Agenten durch ein Peer-to-Peer-Protokoll im Vergleich zu herkömmlichen Verfahren schneller und effizienter, d.h. unter Verwendung einer niedrigeren Anzahl an Nachrichten zwischen den Knoten, erfolgen kann. Auch in dem Fall, dass sich die von den Agenten zur Verfügung gestellten Daten rasch verändern, erweist sich die Datenabfrage unter Verwendung von Peer-to-Peer-Protokollen als vorteilhaft gegenüber herkömmlichen Verfahren, da ein Peer-to-Peer-Protokoll einen Manager effizienter über die Veränderung der Daten zu informieren vermag.

In Weiterbildung der Erfindung verwenden alle Knoten des Netzwerkmanagementsystems zur Kommunikation untereinander ein Peer-to-Peer-Protokoll. Insbesondere können alle Knoten das gleiche Peer-to-Peer-Protokoll einsetzen. Es ist jedoch auch möglich, dass unterschiedliche Knoten unterschiedliche Peer-to-Peer-Protokolle verwenden, bzw. dass mehrere Peer-to-Peer-Protokolle von allen oder manchen Knoten benutzt werden.

Einer vorteilhaften Ausgestaltung der Erfindung gemäß fungiert der mindestens eine Knoten zeitweise als Manager und zeitweise als Agent. Zusätzlich oder alternativ ist es möglich, dass der mindestens eine Knoten in Bezug auf einen Teil des Netzwerkmanagements als Manager und in Bezug auf einen anderen Teil des Netzwerkmanagements als Agent fungiert. Ein Teil des Netzwerkmanagements kann hierbei z.B. eine bestimmte Aufgabe, eine bestimmte Funktion, ein oder mehrere bestimmte Verfahrensschritte des Netzwerkmanagements sein.

Vorteilhaft ist es, wenn der mindestens eine Knoten zum Netzwerkmanagement auf eine auf eine Mehrzahl von Knoten verteilte Datenbank zugreift. Dies bedeutet, dass eine Mehrzahl von Knoten oder auch alle Knoten des Netzwerkmanagementsystems einen Speicher aufweisen, wobei der Gesamtinhalt der Speicher die Datenbank darstellt. Hierbei ist es möglich, dass mehrere Knoten einen gemeinsamen Speicher aufweisen. Insbesondere ist es vorteilhaft, wenn keine zentrale Datenbank existiert, sondern ausschließlich die auf die Speicher mehrerer Knoten verteilte Datenbank. Vorzugsweise können alle Knoten des Netzwerkmanagementsystems unter Verwendung eines Peer-to-Peer-Protokolls auf die verteilte Datenbank zugreifen.

In Weiterbildung der Erfindung kommuniziert der mindestens eine Knoten mit mindestens einem Knoten eines anderen Netzwerkmanagementsystems unter Verwendung eines Peer-to-Peer-Protokolls. Dies resultiert in einer Verknüpfung von mehreren Netzwerkmanagementsystemen, so dass von einem Netzwerkmanagementsystem auf Daten eines anderen Netzwerkmanagementsystems zugegriffen werden kann bzw. Anweisungen an das andere Netzwerkmanagementsystem ergehen können. Dies ist besonders dann günstig, wenn gegenseitige Wechselwirkungen zwischen den verschiedenen Netzwerkmanagementsystemen vorhanden sind. Ein Beispiel für unterschiedliche Netzwerkmanagementsysteme sind Netzwerkmanagementsysteme gehörig zu unterschiedlichen Funkzugangsnetzen oder Funkzugangsnetzen unterschiedlicher Funkzugangstechnologie (RAT, Radio Access Technology), wie z.B. ein Netzwerkmanagementsystem eines GSM (Global System for Mobile Communication) und eines UMTS (Universal Mobile Telecommunications System) Funkkommunikationssystems. Insbesondere bei einer dynamischen Netzkopplung, wie z.B. in dem Fall, dass eine Netzinfrastruktur eines Funknetzes in Flugzeugen, Schiffen oder Zügen an ein anderes Funknetz angekoppelt bzw. von diesem abgekoppelt werden soll, ist die Kommunikation verschiedener Netzwerkmanagementsysteme untereinander vorteilhaft. Weiterhin wird die Flexibilität von Netzwerkmanagementsystemen unterstützt, indem Um- bzw. Neustrukturierungen eines Netzwerkmanagementsystems durch eine Kommunikation von Knoten verschiedener Netzwerkmanagementsysteme ermöglicht wird.

In Ausgestaltung der Erfindung kommuniziert der mindestens eine Knoten unter Verwendung von verschiedenen Netzwerkmanagementprotokollen. Zusätzlich oder alternativ ist es möglich, dass der mindestens eine Knoten unter Verwendung von verschiedenen Peer-to-Peer-Protokollen kommuniziert. Hierbei kann z.B. zeitweise ein erstes Peer-to-Peer-Protokoll und/oder Netzwerkmanagementprotokoll verwendet werden, und zeitweise ein anderes. Auch ist es möglich, dass in Bezug auf bestimmte Knoten als Kommunikationspartner und/oder Aufgaben bzw. Funktionen des Netzwerkmanagements ein Peer-to-Peer-Protokoll und/oder Netzwerkmanagementprotokoll eingesetzt wird, während in Bezug auf andere Knoten als Kommunikationspartner und/oder Aufgaben bzw. Funktionen des Netzwerkmanagements ein anderes Peer-to-Peer-Protokoll und/oder Netzwerkmanagementprotokoll eingesetzt wird.

Der erfindungsgemäße Knoten in einem Netzwerkmanagementsystem, welcher als Manager und/oder als Agent fungiert, weist Mittel auf zum Kommunizieren mit mindestens einem anderen Knoten, welcher als Manager und/oder als Agent fungiert, unter Verwendung einer Peer-to-Peer-Protokolls.

Bei dem erfindungsgemäßen Netzwerkmanagementsystem mit als Manager und/oder als Agent fungierenden Knoten weist zumindest ein Teil der Knoten Mittel zum Kommunizieren mit anderen Knoten unter Verwendung eines Peer-to-Peer-Protokolls auf.

In Ausgestaltung der Erfindung ist die Anzahl der zu einem Zeitpunkt als Manager fungierenden Knoten und/oder der als Agent fungierenden Knoten variabel.

Sowohl der erfindungsgemäße Knoten in einem Netzwerkmanagementsystem als auch das erfindungsgemäße Netzwerkmanagementsystem eignen sich insbesondere zur Durchführung des erfindungsgemäßen Verfahrens, wobei dies auch auf die Ausgestaltungen und Weiterbildungen zutrifft. Hierzu können weitere geeignete Mittel vorgesehen sein.

Im folgenden wird die Erfindung anhand eines Ausführungsbeispiels näher erläutert. Dabei zeigen:
- Figur 1:: zwei Netzwerkmanagementsysteme gemäß dem Stand der Technik,
- Figur 2:: ein erfindungsgemäßes Netzwerkmanagementsystem,
- Figur 3:: ein Schichtenmodell eines Knotens zur Realisation der Erfindung.

Auf den in Figur 1 dargestellten Stand der Technik wurde bereits oben eingegangen.

Figur 2 zeigt ein erfindungsgemäßes Netzwerkmanagementsystem bestehend aus zwei Managern M und fünf Agenten A. Die Knoten M und A des Netzwerkmanagementsystems kommunizieren untereinander unter Verwendung eines Peer-to-Peer-Protokolls. Es existiert keine zentrale Datenbank, in welche Daten von den Managern abgelegt und abgerufen werden. Vielmehr sind auf jedem Knoten M und A des Netzwerkmanagementsystems Daten vorhanden, auf welche andere Knoten M und A unter Verwendung des Peer-to-Peer-Protokolls zugreifen können. Die Datenbank DB des Netzwerkmanagementsystems besteht somit aus den in den einzelnen Speichern der Knoten M und A vorhandenen Managementinformationen des Netzwerkmanagementsystems, angedeutet durch ein Oval, auf welches die Knoten M und A des Netzwerkmanagementsystems zugreifen können. Durch die Managementinformätionen der verschiedenen Speicher der Knoten M und A des in Figur 2 dargestellten Netzwerkmanagementsystems wird somit ein Managementinformationsraum aufgespannt, welcher sich für die Knoten als Datenbank DB darstellt. Die in den Speichern der Knoten M und A abgelegten Daten unterscheiden sich in der Regel voneinander, zur Erhöhung der Redundanz und somit der Sicherheit bei Ausfall eines Knotens M und A können jedoch Daten auch in mehreren Knoten M und A abgelegt sein.

Durch die Verwendung des Peer-to-Peer-Protokolls kann im Prinzip jeder Knoten des Netzwerkmanagementsystems mit jedem anderen Knoten kommunizieren und auf dessen Daten zugreifen. Somit wird die strikte Trennung zwischen der Rolle eines Managers und der eines Agenten aufgehoben. So kann jeder in Figur 2 mit A bezeichneten Knoten Daten von erstens jedem anderen mit A bezeichneten Knoten und zweitens jedem mit M bezeichneten Knoten abrufen und somit als Manager gegenüber jedem anderen Knoten fungieren. Eine solche Gleichstellung der Knoten des Netzwerkmanagementsystems wird durch die Verwendung des Peer-to-Peer-Protokolls ermöglicht. Es ist jedoch dennoch möglich, die Berechtigungen eines Knotens einzuschränken, so dass dieser z.B. vollständig oder auch nur in Bezug auf bestimmte Teile des Netzwerkmanagements lediglich als Agent fungieren darf. Dies entspricht einer eingeschränkten Sichtweise dieses Knotens auf die Datenbank DB. Die Berechtigungen können zentral durch den Netzbetreiber vor dem Initialisieren des Managementinformationsraumes festgelegt werden.

Weiterhin können Teile des Netzwerkmanagementsystems zu virtuellen Teilnetzwerkmanagementsystemen VMD1 bzw. VMD2 (VMD: Virtual Managed Domain) zusammengefasst werden. Bei den virtuellen Teilnetzwerkmanagementsystemen VMD1 bzw. VMD2 kann es sich z.B. um die beiden in Figur 1 dargestellten herkömmlicherweise getrennten Netzwerkmanagementsysteme handeln. So kann in Bezug auf bestimmte Teile des Netzwerkmanagements, welche ausschließlich jeweils eines der beiden virtuellen Teilnetzwerkmanagementsysteme VMD1 bzw. VMD2 betreffen, eine Kommunikation lediglich innerhalb der beiden virtuellen Teilnetzwerkmanagementsysteme VMD1 bzw. VMD2 stattfinden. Die Kommunikation innerhalb der beiden virtuellen Teilnetzwerkmanagementsysteme VMD1 bzw. VMD2 erfolgt unter Verwendung eines Peer-to-Peer-Protokolls. Für systemübergreifende Teile des Netzwerkmanagements, wie z.B. eine An- oder Abkopplung der beiden virtuellen Teilnetzwerkmanagementsysteme VMD1 bzw. VMD2 voneinander oder eine Anpassung von Konfigurationen zwischen den beiden virtuellen Teilnetzwerkmanagementsystemen VMD1 bzw. VMD2, hingegen können Knoten des ersten virtuellen Teilnetzwerkmanagementsystems VMD1 mit Knoten des zweiten virtuellen Teilnetzwerkmanagementsystems VMD2 unter Verwendung eines Peer-to-Peer-Protokolls kommunizieren.

Gemäß dem Stand der Technik hat jeder Manager einen Überblick über den Zustand seiner Agenten, während jeder Agent nur eine Sicht auf seinen eigenen Zustand hat. In dem erfindungsgemäßen System gemäß Figur 2 jedoch ist es möglich, dass jeder Manager sowohl den Überblick über den Zustand eines jeden seiner Agenten als auch über den Zustand eines anderen Managers, welcher einem anderen virtuellen Teilnetzwerkmanagementsystem angehört, als auch über den Zustand der Agenten des anderen Managers hat. Gleiches ist, abhängig von den zugestandenen Rechten, für jeden Knoten des Netzwerkmanagementsystems möglich.

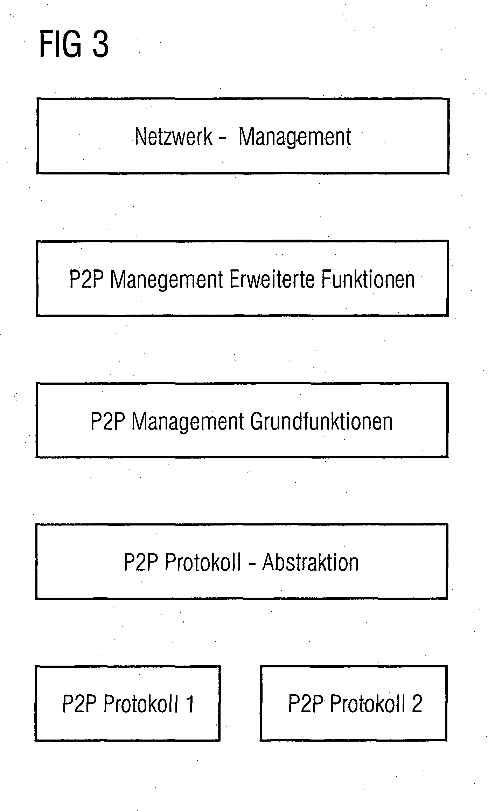

Die Erfindung ist nicht beschränkt auf die Verwendung eines bestimmten Peer-to-Peer-Protokolls. Vielmehr können verschiedene Peer-to-Peer-Protokolle zur Kommunikation zwischen den Knoten eines Netzwerkmanagementsystems verwendet werden. Figur 3 zeigt den Aufbau eines Schichtenmodells, welches zur Realisation der Erfindung auf den Knoten des Netzwerkmanagementsystems realisiert ist. Auf der untersten Schicht sind die Peer-to-Peer-Protokolle verwirklicht, wobei zwei Peer-to-Peer-Protokolle P2P PROTOCOL 1 und P2P PROTOCOL 2 dargestellt sind. Die zweitunterste Schicht P2P PROTOCOL ABSTRACTION dient der Abstraktion der konkreten Eigenschaften der Peer-to-Peer-Protokolle der untersten Schicht, so dass prinzipiell der Einsatz beliebiger Peer-to-Peer-Protokolle möglich ist. Die untersten beiden Schichten sind geprägt durch die Ausgestaltungen von Peer-to-Peer-Protokollen, sie sind unabhängig vom Netzwerkmanagement. Die oberste Schicht GENERIC MANAGEMENT FUNCTIONS hingegen ist unabhängig von den Peer-to-Peer-Protokollen und dient der Realisation des Netzwerkmanagements unter Verwendung verschiedener Netzwerkmanagementprotokolle.

Zwischen den beiden Peer-to-Peer spezifischen untersten Schichten und der obersten netzwerkmanagementspezifischen Schicht befinden sich die beiden Schichten P2P MANAGEMENT BASIC FUNCTIONS und P2P MANAGEMENT ADVANCED FUNCTIONS, welche sowohl Peer-to-Peer-spezifische als auch netzwerkmanagementspezifische Funktionen erfüllen. Diese Schichten nutzen die Möglichkeiten von Peer-to-Peer-Protokollen zur Etablierung des Managementinformationsraumes. Sie übernehmen die Verwaltung und stellen geeignete Methoden zur Manipulation der im Managementinformationsraum vorhandenen Managementinformationen bereit, und sind verantwortlich für die Abstraktion von den untergelagerten Peer-to-Peer-Protokollen.

Die Schicht P2P MANAGEMENT BASIC FUNCTIONS erfüllt folgende Funktionen:
- Steuerung und Abstraktion der untergelagerten Peer-to-Peer-Protokolle,
- Realisierung des Bootstrappings, d.h. des Auffindens eines anderen Peers,
- Erzeugen und Verwalten des Management Namensraumes, d.h. der Repräsentation der einzelnen Knoten des Netzwerkmanagementsystems,
- Realisierung der Sicherheitsfunktionen, um die Abschottung zu anderen Peer-to-Peer Räumen zu gewährleisten und die Kontrolle der Zutrittsregeln zum eigenen Raum zu realisieren und zu überwachen,
- Garantie der Konsistenz der im Netzwerkmanagementsystem gehaltenen Daten.

Die Schicht P2P MANAGEMENT ADVANCED FUNCTIONS erfüllt folgende Funktionen:
- Repräsentation verschiedener Netzwerkmanagement Informationsmodelle im Managementinformationsraum, realisiert durch die Abstraktion von verschiedenen Informationsmodellen, von einzelnen Knoten und deren Eigenschaften,
- Realisierung der Zugriffsmethoden im Managementinformationsraum auf einzelne Knoten und Gruppen von Knoten,
- Realisierung von Verarbeitungsmethoden für höhere Instanzen,
- Realisierung eines beliebigen Redundanzlevels für die im Managementinformationsraum gehaltenen Informationen,
- Realisierung der notwendigen Filtermethoden, um ein verteiltes Suchen nach Managementinformationen zu ermöglichen,
- Realisierung einer automatisierten Funktionsübernahme durch andere Knoten.

Durch den Einsatz des in Figur 3 dargestellten Schichtenmodells werden somit eine Reihe von Vorteilen gegenüber herkömmlichen Netzwerkmanagementsystemen erreicht:
- Abstraktion vom verwendeten Informationsmodell, es sind nunmehr beliebige Informationsmodelle in dem Netzwerkmanagementsystem anwendbar,
- Abstraktion vom verwendeten Netzwerkmanagementprotokoll, es sind nunmehr beliebige Netzwerkmanagementprotokolle in dem Netzwerkmanagementsystem anwendbar,
- dynamische Zuweisung von Bestandteilen der virtuellen Teilnetzwerkmanagementsysteme, abhängig vom gewählten Informationsmodell und Netzwerkmanagementprotokoll,
- Kooperation zwischen Agenten durch Verwendung der Peer-to-Peer-Protokolle, abhängig von Rollen und Rechten des verwendeten Informationsmodells,
- Erleichterte Verarbeitung von Netzwerkmanagementdaten, indem beliebige Anfragen von Knoten nach im Managementinformationsraum gehaltenen Daten möglich sind,
- Effizientere Verwaltung von Netzwerkmanagementdaten, indem die logische Sicht auf die im Managementinformationsraum gehaltenen Daten losgelöst von der physikalischen Position der einzelnen Knoten ist,
- Automatische, skalierbar redundante Verteilung von Netzwerkmanagementinformationen,
- Dynamische Zuordnung von Rollen zu den Knoten,
- Verteilte Suche nach Netzwerkmanagementinformationen unabhängig von der physikalischen Position der einzelnen Knoten, so dass unspezifisches Herunterladen von Daten von

einer Mehrzahl von Knoten, um sie anschließend lokal zu durchsuchen bzw. zu filtern, vermieden werden kann,
- Skalierbarkeit des gesamten Managementinformationsraumes,
- Hohe Zuverlässigkeit und Robustheit des Netzwerkmanagementsystems ohne aufwendige Infrastruktur, höhere Ausfallsicherheit durch Verteilen von Funktionalitäten auf beliebige Knoten,
- Unterstützung für selbstorganisierende Netzwerke, wie z.B. Ad Hoc Netzwerke oder sich bewegende Netzabschnitte eines Mobilfunkkommunikationssystems.

Im folgenden konkreten Beispiel wird ein Netzwerkmanagementsystem betrachtet, welches aus einem Manager und 100 Agenten besteht, welche durch ihre Managementinformationen den Managementinformationsraum aufspannen. Der Managementinformationsraum kann z.B. so etabliert werden, dass eine Instanz, d.h. ein Knoten des Netzwerkmanagementsystems, von einer berechtigten Person konfiguriert wird für die entsprechenden Peer-to-Peer-Protokolle und Informationsmodelle. Alle weiteren Knoten erhalten Kenntnis von dieser "Ur-Instanz", wobei dies drahtlos oder auch drahtgebunden erfolgen kann. Über Verhandlungsalgorithmen bezüglich der Auswahl der zu verwendenden Peer-to-Peer-Protokolle und Informationsmodelle können neue Instanzen, d.h. Knoten, mit der "Ur-Instanz" den Informationsraum aufspannen. Das Informationsmodell beinhaltet alle Methoden zur Manipulation von Managementinformationen innerhalb des Managementinformationsraumes, sowie die Sicher heitsfunktionen zur Aufrechterhaltung des Managementinformationsraumes. Neue Knoten bzw. Gruppen von Knoten können somit unmittelbar dem Managementinformationsraum beitreten bzw. aus ihm austreten.

Es wird der Ablauf einer verteilten Suche des Managers im Detail dargestellt. Hierbei wird der Fall betrachtet, dass der Manager, um eine optimale Funktion des Netzwerkes zu ermöglichen, feststellen muss, bei welchen Knoten ein bestimmter Zähler, wie z.B. ein Zähler für die Anzahl an weitergeleiteten Paketen des Knotens innerhalb eines Zeitintervalls, einen Schwellenwert überschritten hat.

Gemäß dem Stand der Technik würde der Manager hierzu alle 100 Agenten direkt adressieren, indem er eine entsprechende Anfrage nach dem Zählerwert sendet. Diejenigen Agenten, bei denen der Zähler einen Wert aufweist bzw. bei denen der Zähler implementiert ist, senden eine Antwort. Der Manager befüllt einen Speicher mit den empfangenen Zählerwerten und überprüft für jeden Zähler, ob dieser den Schwellenwert überschreitet.

Bei der erfindungsgemäßen Verwendung eines Peer-to-Peer-Protokolls wird der Zähler auf einen Schlüsselwertebereich des Peer-to-Peer-Protokolls abgebildet und die Anfrage von dem Manager in den Managementinformationsraum gesendet. Jeder Agent überprüft lokal die Bedingung ab, ob der Zähler den Schwellenwert überschreitet. Diejenigen Agenten, bei denen die Bedingung zutrifft, senden eine dementsprechende Nachricht unter Verwendung des Peer-to-Peer-Protokolls an den Manager. Insbesondere bei einer großen Anzahl an Agenten wird somit durch die Verwendung eines Peer-to-Peer-Protokolls die Versendung einer Vielzahl an Nachrichten vermieden. Dem Manager stehen die benötigten Informationen rascher zur Verfügung, und das Netzwerkmanagementsystem wird nicht durch eine Vielzahl an zwischen dem Manager und seinen Agenten versendeten Nachrichten blockiert.

## Patentansprüche

1. Verfahren zum Betreiben eines Netzwerkmanagementsystems mit als Manager und/oder als Agent fungierenden Knoten (A, M),
bei dem
mindestens ein Knoten (A, M) mit mindestens einem anderen Knoten (A, M) unter Verwendung eines Peer-to-Peer-Protokolls kommuniziert,
**dadurch gekennzeichnet, dass** auf dem mindestens einen Knoten (A, M) Verfahrensschritte mittels eines Schichtenmodells durchgeführt werden, wobei
• über eine erste Schicht für mindestens ein Peer-to-Peer Protokoll spezifische Verfahrensschritte (P2P PROTOCOL 1, P2P PROTOCOL 2, P2P PROTOCOL ABSTRACTION) durchgeführt werden,
• über eine zweite Schicht netzwerkmanagementspezifische Verfahrensschritte (GENERIC MANAGMENT FUNCTIONS) durchgeführt werden,
• über eine dritte Schicht sowohl für mindestens ein Peer-to-Peer Protokoll spezifische als auch netzwerkmanagementspezifische Verfahrensschritte (P2P MANAGMENT BASIC FUNCTIONS, P2P MANAGEMENT ADVANCED FUNCTIONS) durchgeführt werden.

2. Verfahren nach Anspruch 1,
**dadurch gekennzeichnet,**
**dass** alle Knoten (A, M) des Netzwerkmanagementsystems zur Kommunikation untereinander ein Peer-to-Peer-Protokoll verwenden.

3. Verfahren nach Anspruch 1 oder 2,
**dadurch gekennzeichnet,**
**dass** der mindestens eine Knoten (A, M) zeitweise als Manager und zeitweise als Agent fungiert.

4. Verfahren nach einem der Ansprüche 1 bis 3,
**dadurch gekennzeichnet,**
**dass** der mindestens eine Knoten (A, M) in Bezug auf einen Teil des Netzwerkmanagements als Manager und in Bezug auf einen anderen Teil des Netzwerkmanagements als Agent fungiert.

5. Verfahren nach einem der Ansprüche 1 bis 4,
**dadurch gekennzeichnet,**
**dass** der mindestens eine Knoten (A, M) zum Netzwerkmanagement auf eine auf eine Mehrzahl von Knoten (A, M) verteilte Datenbank (DB) zugreift.

6. Verfahren nach einem der Ansprüche 1 bis 5,
**dadurch gekennzeichnet,**
**dass** der mindestens eine Knoten (A, M) mit mindestens einem Knoten (A, M) eines anderen Netzwerkmanagementsystems unter Verwendung eines Peer-to-Peer-Protokolls kommuniziert.

7. Verfahren nach einem der Ansprüche 1 bis 6,
**dadurch gekennzeichnet,**
**dass** der mindestens eine Knoten (A, M) unter Verwendung von verschiedenen Netzwerkmanagementprotokollen kommuniziert.

8. Verfahren nach einem der Ansprüche 1 bis 7,
**dadurch gekennzeichnet,**
**dass** der mindestens eine Knoten (A, M) mit anderen Knoten (A, M) unter Verwendung von verschiedenen Peer-to-Peer-Protokollen kommuniziert.

9. Knoten (A, M) zum Netzwerkmanagement in einem Netzwerkmanagementsystem, welcher als Manager und/oder als Agent fungiert,
**dadurch gekennzeichnet, dass**
der Knoten (A, M) Mittel aufweist zum Kommunizieren mit mindestens einem anderen Knoten (A, M), welcher als Manager und/oder als Agent fungiert, unter Verwendung eines Peer-to-Peer-Protokolls,
wobei auf dem Knoten (A, M) ein Schichtenmodell realisiert ist mit Mitteln zur Durchführung der Verfahrensschritte gemäß Anspruch 1.

10. Netzwerkmanagementsystem mit als Manager und/oder als Agent fungierenden Knoten (A, M),
bei dem zumindest ein Teil der Knoten (A, M) Mittel zum Kommunizieren mit anderen Knoten (A, M) unter Verwendung eines Peer-to-Peer-Protokolls aufweist,
**dadurch gekennzeichnet, dass** auf zumindest dem Teil der Knoten (A, M) ein Schichtenmodell realisiert ist mit Mitteln zur Durchführung der Verfahrensschritte gemäß Anspruch 1.

11. Netzwerkmanagementsystem nach Anspruch 10,
**dadurch gekennzeichnet,**
**dass** die Anzahl der zu einem Zeitpunkt als Manager fungierenden Knoten (M) und/oder der als Agent fungierenden Knoten (A) variabel ist.

## Claims

1. Method for the operation of a network management system comprising nodes (A, M) which are used as manager and/or agent nodes,
in which
at least one node (A, M) communicates with at least one other node (A, M) by using a peer-to-peer protocol, **characterised in that** method steps are performed on said at least one node (A, M) by means of a layer model, in which
• method steps specific to at least one peer-to-peer protocol (P2P PROTOCOL 1, P2P PROTOCOL 2, P2P PROTOCOL ABSTRACTION) are performed via a first layer,
• network management-specific method steps (GENERIC MANAGEMENT FUNCTIONS) are performed via a second layer,
• method steps specific to at least one peer-to-peer protocol and network management-specific method steps (P2P MANAGEMENT BASIC FUNCTIONS, P2P MANAGEMENT ADVANCED FUNCTIONS) are performed via a third layer.

2. Method according to claim 1,
**characterised in that**
all the nodes (A, M) of the network management system use a peer-to-peer protocol for communicating among themselves.

3. Method according to claim 1 or 2,
**characterised in that**
said at least one node (A, M) is used at times as a manager and at times as an agent.

4. Method according to one of claims 1 to 3,
**characterised in that**
said at least one node (A, M) is used as a manager with reference to one part of the network management and as an agent with reference to another part of the network management.

5. Method according to one of claims 1 to 4,
**characterised in that**
said at least one node (A, M) accesses a database (DB) distributed over a plurality of nodes (A, M) for the purposes of network management.

6. Method according to one of claims 1 to 5,
**characterised in that**
said at least one node (A, M) communicates with at least one node (A, M) of another network management system by using a peer-to-peer protocol.

7. Method according to one of claims 1 to 6,
**characterised in that**
said at least one node (A, M) communicates by using various network management protocols.

8. Method according to one of claims 1 to 7,
**characterised in that**
said at least one node (A, M) communicates with other nodes (A, M) by using various peer-to-peer protocols.

9. Node (A, M) for the purposes of network management in a network management system, which node is used as a manager and/or as an agent,
**characterised in that** the node (A, M) displays means for communicating with at least one other node (A, M) which is used as a manager and/or as an agent, by using a peer-to-peer protocol,
wherein a layer model is implemented on the node (A, M) with means for performing the method steps according to claim 1.

10. Network management system comprising nodes (A, M) which are used as manager and/or agent nodes,
in which at least a part of the nodes (A, M) displays means for communicating with other nodes (A, M) by using a peer-to-peer protocol,
**characterised in that** a layer model is implemented on at least said part of the nodes (A, M) with means for performing the method steps according to claim 1.

11. Network management system according to claim 10,
**characterised in that**
the quantity of nodes (M) which are used as manager nodes and/or nodes (A) which are used as agent nodes at one time is variable.

## Revendications

1. Procédé d'exploitation d'un système de gestion de réseau comportant des noeuds (A, M) qui servent de gestionnaires et/ou d'agents, selon lequel au moins un noeud (A, M) communique avec au moins un autre noeud (A, M) en utilisant un protocole pair à pair, **caractérisé en ce que** sont exécutées, sur l'au moins un noeud (A, M), des étapes de procédé au moyen d'un modèle de couches,
- des étapes de procédé spécifiques pour au moins un protocole pair à pair (P2P PROTOCOL 1, P2P PROTOCOL 2, P2P PROTOCOL ABSTRACTION) étant exécutées via une première couche ;
- des étapes de procédé spécifiques pour la gestion de réseau (GENERIC MANAGEMENT FUNCTIONS) étant exécutées via une deuxième couche ;
- des étapes de procédé non seulement spécifiques pour au moins un protocole pair à pair, mais aussi spécifiques pour la gestion de réseau (P2P MANAGEMENT BASIC FUNCTIONS, P2P MANAGEMENT ADVANCED FUNCTIONS) étant exécutées via une troisième couche.

2. Procédé selon la revendication 1, **caractérisé en ce que** tous les noeuds (A, M) du système de gestion de réseau utilisent un protocole pair à pair pour communiquer entre eux.

3. Procédé selon la revendication 1 ou 2, **caractérisé en ce que** l'au moins un noeud (A, M) sert temporairement de gestionnaire et temporairement d'agent.

4. Procédé selon l'une des revendications 1 à 3, **caractérisé en ce que** l'au moins un noeud (A, M) sert de gestionnaire en référence à une partie de la gestion de réseau et d'agent en référence à une autre partie de la gestion de réseau.

5. Procédé selon l'une des revendications 1 à 4, **caractérisé en ce que** l'au moins un noeud (A, M) accède, pour la gestion de réseau, à une base de données (DB) distribuée sur une pluralité de noeuds (A, M).

6. Procédé selon l'une des revendications 1 à 5, **caractérisé en ce que** l'au moins un noeud (A, M) communique avec au moins un noeud (A, M) d'un autre système de gestion de réseau en utilisant un protocole pair à pair.

7. Procédé selon l'une des revendications 1 à 6, **caractérisé en ce que** l'au moins un noeud (A, M) communique en utilisant différents protocoles de gestion de réseau.

8. Procédé selon l'une des revendications 1 à 7, **caractérisé en ce que** l'au moins un noeud (A, M) communique avec d'autres noeuds (A, M) en utilisant différents protocoles pair à pair.

9. Noeud (A, M) destiné à la gestion de réseau dans un système de gestion de réseau, lequel noeud sert de gestionnaire et/ou d'agent, **caractérisé en ce que** le noeud (A, M) comporte des moyens pour communiquer, en utilisant un protocole pair à pair, avec au moins un autre noeud (A, M) qui sert de gestionnaire et/ou d'agent, sur le noeud (A, M) étant réalisé un modèle de couches avec des moyens permettant d'exécuter les étapes de procédé selon la revendication 1.

10. Système de gestion de réseau comportant des noeuds (A, M) qui servent de gestionnaires et/ou d'agents, selon lequel au moins une partie des noeuds (A, M) comporte des moyens pour communiquer avec d'autres noeuds (A, M) en utilisant un protocole pair à pair, **caractérisé en ce qu'**est réalisé, sur au moins une partie des noeuds (A, M), un modèle de couches avec des moyens permettant d'exécuter les étapes de procédé selon la revendication 1.

11. Système de gestion de réseau selon la revendication 10, **caractérisé en ce que** le nombre de noeuds (M) servant de gestionnaires à un instant et/ou de noeuds (A) servant d'agents est variable.
